**Europäisches Patentamt**

(19) **European Patent Office**

**Office européen des brevets**

(11) Publication number: **0 250 539 B1**

(12) # EUROPEAN PATENT SPECIFICATION

(45) Date of publication of patent specification :
02.05.91 Bulletin 91/18

(51) Int. Cl.⁵ : **A01N 25/22, A01N 59/00**

(21) Application number : **87900328.3**

(22) Date of filing : **16.12.86**

(86) International application number:
**PCT/SE86/00576**

(87) International publication number:
**WO 87/03779 02.07.87 Gazette 87/14**

(54) **STABILIZED HYDROGEN PEROXIDE COMPOSITION, PROCESS FOR THE PREPARATION THEREOF AND THE USE THEREOF.**

(30) Priority : **20.12.85 SE 8506072**

(43) Date of publication of application :
**07.01.88 Bulletin 88/01**

(45) Publication of the grant of the patent :
**02.05.91 Bulletin 91/18**

(84) Designated Contracting States :
**AT BE CH DE FR GB IT LI LU NL SE**

(56) References cited :
**WO-A-82/03173**
**GB-A- 1 174 672**

(73) Proprietor : **Biogram AB**
**Box 260**
**S-201 22 Malmö (SE)**

(72) Inventor : **EKMAN, Bo, Magnus**
**Manstigen 9**
**S-216 19 Malmö (SE)**
Inventor : **KJELLBERG, Bengt, Erik, Sigvard**
**Jerrestadsvägen 5**
**S-245 00 Staffanstorp (SE)**
Inventor : **LARSSON, Kare, Viktor**
**Trollsjövägen 50**
**S-237 00 Bjärred (SE)**
Inventor : **LINDAHL, Ake, Rikard**
**Ringduvevägen 50**
**S-274 00 Skurup (SE)**

(74) Representative : **Henningsson, Gunnar et al**
**AWAPATENT/Bergling & Sundbergh,**
**Sveavägen 13-15, Box 7645**
**S-103 94 Stockholm (SE)**

EP 0 250 539 B1

## Description

The present invention is within the field of stabilized aqueous hydrogen peroxide compositions, i.e. compositions wherein the strong tendency of decomposition of the hydrogen peroxide is reduced or inhibited by the presence of a stabilizing agent. Such stabilized compositions are previously known per se, but the novel and characteristic in connection with the present invention is that the stabilizing agent is present in essentially much more reduced concentrations than according to the prior art, which gives an aqueous dispersion having a completely different consistency than that of the prior art products. This in turn opens up possibilities of completely novel applications in which the antimicrobial effects of the hydrogen peroxide which are known per se are utilized. Furthermore, the invention relates to a process for the preparation of the novel composition as well as to a special use thereof, viz. as a teat dipping or immersion composition intended for milkproducing animals.

### BACKGROUND OF THE INVENTION

It ia previously known that hydrogen peroxide can be stabilized by β-crystals of 1-monolaurin and 1-monomyristin in an aqueous medium. Thus, e.g. PCT/SE82/00061 discloses a germicidal aqueous composition wherein hydrogen peroxide has been stabilized by means of 1-monolaurin or a mixture of 1-monolaurin and 1-monomyristin. The hypothesis or theory referred to as an explanation of the reaction-inhibiting effect means that the hydrogen peroxide would be bonded or attached to the crystal surfaces. Consequently, in order to obtain a stable system the number of moles of monoglyceride is in par with or equal to the number of moles of hydrogen peroxide. In practice this means that the composition disclosed in said PCT publication is of such a consistency that it must be utilized in the form of an ointment.

In connection with the prior art it can also be added that so called β-crystals and the technique by means of which such can be obtained is also previously known, e.g. from the above mentioned PCT publication and from GB 1, 174, 672. Thus, those β-crystals which are referred to according to the present invention are hydrophilic crystals from polar lipids, i.e. having hydrophilic dominating surfaces, and further details concerning the crystals can be found within the known art, i.e. inter alia from the above-mentioned two references.

### SUMMARY OF THE INVENTION

According to the present invention it has turned out that hydrogen peroxide can be stabilized in an aqueous medium in the presence of β-crystals of certain lipids, wherein the amount or proportion of said β-crystals is considerably much lower than according to the prior art, more specifically at least 10 times lower and generally approximately 30 times lower. This means essential advantages as compared to the known oitment base through the fact that in principle the consistency of the obtained composition is a liquid instead of an ointment, and the stabilizing effect which is obtained by the invention is extremely unexpected in view of the previously known hypotheses. Thus, these do not suggest any possibility of stabilizing hydrogen peroxide by means of such a low concentration of β-crystals which is now utilized. The unexpected effect obtained by the invention seems to indicate, the invention however not being limited to said therory, that surfaces of the β-crystals bind or inactivate some of the intermediates in the decomposition of hydrogen peroxide. Such a theory might explain why autocatalysis does not take place and why that low proportions of crystals can stabilize hydrogen peroxide. Through the fact that the autocatalysed decomposition of hydrogen peroxide is inhibited, the hydrogen peroxide can for instance be made compatible with several normally oxidation sensitive substances, such as e.g. polymers of a biological origin, surface active substances and others. A specially interesting use of the composition, which will also be disclosed more in detail below, is also the teat immersion composition referred to above.

More specifically the stabilized aqueous hydrogen peroxide composition according to the invention is characterized in that it comprises an aqueous dispersion which, based on the total weight of the composition, contains 0.1-4 percent by weight of hydrogen peroxide, and 0.5-15, preferably 0.5-10, percent by weight of β-crystals of one or more lipids chosen among monoglycerides from fatty acids, ascorbic acid, phosphate or lactic acid esters from fatty acide and monoglycerol ethers, said fatty acids and ether chains being saturated and having 12-18 carbon atoms.

The composition referred to above in connection with the composition claimed is based on those ingredients which are essential and interesting to the invention. Of course the hydrogen peroxide composition claimed can, however, also contain other additives which do not interfere with the stabilisation of the hydrogen peroxide which is accomplished according to the invention and which are previously known per se in connection with hydrogen peroxide compositions and/or in those applications for which the composition claimed is intended or suited. However, there is no need to disclose these more in detail herein.

Thus, the concentration of hydrogen peroxide in the composition is generally within the range of 0.1-4 per-

EP 0 250 539 B1

cent by weight, the specific use in each single case being decisive of the exact amounts of hydrogen peroxide to be used. This is within what can be easily determined by a person skilled in the art based on the prior art. However, an especially preferable concentration range for certain interesting applications according to the invention is 0.1-2 percent by weight and in many cases 0.2-1 percent by weight, which percentages are also based on the total composition claimed as defined above.

As concerns the proportion of $\beta$-crystals it is chosen within the above-mentioned range of 0.5-15, especially 0.5-10, percent by weight dependent on the stability which is desired for the hydrogen peroxide composition in each single case. Thus, in this connection stability is not any unambiguous and well-defined term but in principle it may mean each and every minor improvement of the resistance against decomposition as compared to an aquouz composition which is completely free from any stabilizing agent. However, for many uses stability means that the concentration of hydrogen peroxide is not changed with more than ±5% for a period of approximately 1 year. According to the invention it has been shown that in many cases such an effect can be obtained within the concentration range of 1-5 percent by weight, which is, thus, preferable in many cases, and an especially interesting range in certain cases can be 1-3 percent by weight.

With reference to the theory and the practice in connection with the preparation of the hydrophilic $\beta$-crystals which are used in the composition according to the invention reference is made to the above-mentioned prior art. However, the group of substances which is referred to in connection with the invention is the above-mentioned group. The monoglyceride used may be an 1- or 2-monoglyceride or an equilibrium mixture that is obtained in the manufacture according to a molecular destillation with about 90% of 1-mono- and 10% of 2-monoglyceride, preferable compounds within acid group, e.g. 1-compounds, being monolaurin, monomyristin, monopalmitin and monostearin or a mixture of two or more of these. Especially preferable are monolaurin or a mixture of monolaurin and monomyristin, wherein the proportion of monolaurin is at least 10 percent by weight.

The decomposition of hydrogen peroxide is catalyzed also by metal ions, such as e.g. Fe and Cu. These metal ions may be present in the water which is used in the manufacture or may be dissolved from metal parts of the equipment. However, according to the present invention it has been shown that combinations between a complex forming agent and $\beta$-crystals of the type referred to above are advantageous for the stability of hydrogen peroxide in the presence of metal ions. More specifically the effect of said combination or mixture is much greater than the sum of the effects of the separate ingredients, i.e. a synergistic effect is obtained.

Therefore, a preferable composition according to the invention is a composition which contains a metal ion complex forming agent in an amount that enhances the stability of the hydrogen peroxide in the presence of said metal ion.

The type of complex forming agent is selected in accordance with previously known principles, i.e. in dependency of what metal ion(a) is (are) present within the system. However, as examples of especially interesting complex forming agents there can be mentioned EDTA (ethylene diamine tetraacetic acid), citric acid, ascorbic acid and different phosphonic acids.

Nor is it possible to say anything general about the proportion of the complex forming agent in the composition claimed. Thus, it is dependent on the proportion of metal iona present in the system, which means that the proportion of the complex forming agent is chosen by a person skilled in the art from case to case. Generally, however, the proportions of the above-mentioned specific complex forming agents are preferably the following:

| EDTA | < 0.1 percent by weight |
| citric acid | < 2 " " " |
| ascorbic acid | < 2 " " " |
| phosphonic acid | < 2 " " " |

these percentages being based on the weight of the total composition.

The stabilized hydrogen peroxide composition can be manufactured by first forming $\beta$-crystals of the above-mentioned lipids in a manner known per se, e.g. as is disclosed in the references referred to in the opening part of the specification, and then adding the hydrogen peroxide in the desired amount to the formation of the dispersion according to the invention.

However, an especially preferable process according to the invention is a process wherein the lipid is mixed with at least part of the water to be present in the final composition, preferably to a lipid concentration of 15-30 percent by weight, a temperature is imparted to the mixture which is above the so called transition of conversion temperature of the lipid, which temperature is defined as the lowest temperature at which a particle of the lipid in contact with an excess of water absorbs water and is converted to cylindrical or spherical particles with a marked birefringence, the mixture is maintained above said temperature while stirring until acid conversion has

3

taken place, the mixture is cooled with continued stirring to room temperature or the desired temperature so as to form β-crystals, and hydrogen peroxide is added in an amount of 0.1-4 percent by weight of the total weight of the final composition, the hydrogen peroxide preferably being added as a solution in the remainder of the water to be used for the composition.

Thus, as should be clear from the above-mentioned, the mixture of lipid and water is preferably prepared in part only of the total water to be present in the composition, the remainder thereof being added together with the hydrogen peroxide. If further additives are to be present in the composition, such as for instance the above-mentioned complex forming agents, these are also preferably added in the form of an aqeuous solution, i.e. instead of being mixed directly into a final preparation from β-lipid crystals and water.

To obtain the beat possible result the mixture is preferably kept in the procezz according to the invention, at a temperature which is 5-15°C, e.g. 10°C, above the conversion temperature until equilibrium has been reached.

Then the temperature of the equilibrium mixture is slowly lowered to the desired temperature, which is generally room temperature, a rapid stirring preferably being maintained to prevent the separation of a homogeneous aqueous phase within the mixture. However, the stirring rate should preferably not be so high as to cause any foaming effect. The temperature is preferably lowered at a rate of 0.5-5°C per minute until crystallisation has taken place, whereupon the cooling rate is not critical.

As concerns application areas of the hydrogen peroxide composition according to the invention, it should be noted that some uses are disclosed in the working examples below. Moreover, the composition claimed can of course be utilized in such connections where hydrogen peroxide compositions have previously been used. However, an especially interesting use of the invention is represented by the use of the composition as a teat immersion composition for milk-producing animals, which use will be discloeed more in detail below.

Teat immersion is today utilised in order to improve the hygienic quality of milk and to prevent the development of udder inflamations, so called mastitis. The primary contents of those agents which are available to day is iodine or chlorohexidine. Iodine has several disadvantagez, such as e.g. tissue changes within the teat, influence upon the milk and a doubtful effect. Chlorohexidine imparts taste effects to the milk and after having been uaed for some time it may cause a resistency development. Hydrogen peroxide, i.e. the active ingredient of the composition according to the invention, does not show any of the disadvantages referred to. Moreover, the novel light-flowing consistency of the composition claimed is the characteristic which in practice enables the use of a hydrogen peroxide composition in this context, i.e. that the treatment can be accomplished by a simple dipping or immersion of the teats into a solution having a good flowability.

The novel teat immersion composition according to the invention has turned out to poseess the following positive properties : a general antimicrobial effect without any resistancy development, no influence on the milk and a plasticising effect on the teats.

The invention will now be further disclosed by the examples below, which relate to some preferable embodiments of the invention and which are not considered to be limiting upon the scope of the invention in any other respect than what can be gathered from the claims. In connection with the examplesit should be noted that the percentages referred to relate to percentages by weight unless otherwise stated.

## EXAMPLE 1

This example relates to the preparation of a composition according to the invention wherein the antibacterial effect of hydrogen peroxide can be utilized, e.g. in the form of a hand-desinfectant, which composition is as follows :

| Hydrogen peroxide | 0.5 | % |
|---|---|---|
| Laurin monoglyceride | 0.35 | % |
| Myristin monoglyceride | 1.05 | % |
| Tenside * | 30 | % |
| Water, up to | 100.0 | % |

\* In this case tenside means a surface active substance suitable for the cleaning of skin.

The preparation is manufactured in accordance with the method which is disclosed in PCT/SE82/00061 referred to above. This means that 0.35 parts of laurin monoglyceride and 1.05 parts of myristine monoglyceride are admixed with 3.6 parts of water and are heated to 70°C. After 15 minutes at said temperature the temperature is lowered while stirring at 0.5-5°C per minute to 25°C. Then 0.5 parts of hydrogen peroxide in 64.5 parts of water and 30 parts of tenside are added.

EXAMPLE 2

This example relates to the manufacture of a stable hydrogen peroxide preparation having a high content of iron.

The composition of the preparation is as follows :

| | | |
|---|---|---|
| Hydrogen peroxide | 2.0 | % |
| Laurin monoglyceride | 0.3 | % |
| Myristin monoglyceride | 0.9 | % |
| EDTA | 0.05 | % |
| Water, up to | 100.0 | % |

The preparation is manufactured as is disclosed in Example 1 with the addition of EDTA in connection with the addition of hydrogen peroxide.

After being stored for 9 months and having an iron content of 1.5 ppm the hydrogen peroxide content of the above-mentioned preparation has not been changed, while a preparation containing merely EDTA, hydrogen peroxide, water and iron (in the form of $FeSO_4$) in the proportions referred to above contains less than 0.8% of hydrogen peroxide after two days. After a storage period of 9 months a preparation consisting of the above-mentioned monoglycerides and hydrogen peroxide and water and iron in the proportions referred to above contains 1.8% of hydrogen peroxide.

EXAMPLE 3

In the way disclosed in Example 1 a composition as is disclosed below is manufactured :

| | | |
|---|---|---|
| Hydrogen peroxide | 0.5 | % |
| Xanthan rubber | 0.5 | % |
| Laurin monoglyceride | 0.35 | % |
| Myristin monoglyceride | 1.05 | % |
| Water, up to | 100.0 | % |

Among other things this Example shows that the hydrogen peroxide according to the invention can be made compatible with thickening agents, such as e.g. polysaccarides. The composition obtained possesses an antimicrobial effect and is useful inter alia as a teat immersion agent.

EXAMPLE 4

In the manner disclosed in Example 1 a composition as the one disclosed below is manufactured :

| | | |
|---|---|---|
| Hydrogen peroxide | 0.2 | % |
| Myristin monoglyceride | 1.0 | % |
| Washing-active tenside | 25.0 | % |
| Water, up to | 100.0 | % |

The present Example shows an interesting use which is based on the fact that the inhibition of the decom-

5

position of hydrogen peroxide means that preparations containing tensides for washing or cleaning can be preserved with hydrogen peroxide. Without such an inhibition liberated oxygen would oxidize the tenside. The preparation obtained is stable against microbiological contamination for at least 3 years and does not contain any allergy-causing preservatives. This preparation can also be manufactured in a concentrated form to be diluted to the above-mentioned concentration with the product to be preserved.

EXAMPLE 5

A number of comparative stability tests were made to study how the percentages of β-crystalline monoglycerides influence on the decomposition reaction rate of hydrogen peroxide. The results of said tests are presented in Table 1.

### TABLE 1

| | Concentration of hydrogen peroxide | | |
|---|---|---|---|
| Percentage of monoglyceride | 28 % | 1.4 % | 0 % |
| Number of analyses | n = 6 | n = 6 | n = 7 |
| Time (months) | | | |
| 0 | 0.564 | 0.618 | 0.531 |
| 1 | | 0.601 | 0.037 |
| 2 | 0.590 | 0.599 | 0 |
| 3 | | 0.588 | |
| 5 | | 0.595 | |
| 6 | 0.544 | 0.603 | |
| 8 | 0.536 | 0.595 | |

As is clear from the above-mentioned results a composition according to the invention, i.e. the one containing 1.4% of hydrogen peroxide, is comparable to a previously known composition containing 28% of hydrogen peroxide as concerns the decomposition rate while a composition without any monoglyceride is decomposed at a very high rate. These results are quite unexpected in view of the theories upon which the prior art compositions are based and means great advantages as has already been discussed.

**Claims**

1. A stabilized aqueous hydrogen peroxide composition, *characterized* in that it comprises an aqueous dispersion which, based on the total weight of the composition, contains 0.1-4 percent by weight of hydrogen peroxide and 0.5-5 percent by weight of β-crystals of one or more lipids selected from monoglycerides of fatty acids, ascorbic acid, phosphate or lactic acid esters of fatty acids and monoglycerol ethers, said fatty acids and ether chains, respectively, being saturated and having 12-18 carbon atoms.

2. A composition according to claim 1, *characterized* in that the monoglyceride is monolaurin, monomyristin, monopalmitin or monostearin or a mixture of two or more of these.

3. A composition according to claim 2, *characterized* in that the monoglyceride is monolaurin or a mixture of monolaurin and monomyristin wherein the proportion of monolaurin is at least 10 percent by weight.

4. A composition according to any one of the preceding claims, *characterized* in that the concentration of hydrogen peroxide is 0.1-2 percent by weight, especially 0.2-1 percent by weight.

5. A composition according to any one of the preceding claims, *characterized* in that the concentration of β-lipid crystals is 1-5 percent by weight, especially 1-3 percent by weight.

6. A composition according to any one of the preceding claims, *characterized* in that it contains a metal ion complex-forming agent in a concentration that improves the stability of the hydrogen peroxide in the presence of said metal ion.

7. A composition according to claim 6, *characterized* in that the complex-forming agent is selected among ethylene diamine tetraacetic acid (EDTA), citric acid, ascorbic acid and phosphonic acids, and that the concentrations thereof are preferably the following :

```
EDTA                < 0.1 percent by weight

citric acid         < 2         "       "       "

ascorbic acid       < 2         "       "       "

phosphonic acid     < 2         "       "       "
```

based on the weight of the total composition.

8. A process for the preparation of a stabilized aqueous hydrogen peroxide composition as claimed in any one of claims 1-7, *characterized* by mixing the lipid with at least part of the water to be present in the final composition, preferably to a lipid concentration of 15-30 percent by weight, imparting to said mixture a temperature above the so called conversion temperature of the lipid, which temperature is defined as the lowest temperature at which a particle of the lipid in contact with an excess of water absorbs water and is converted to cylindrical or spherical particles having a strong birefrigence, maintaining the mixture above said temperature while stirring until conversion has taken place, cooling the mixture with continuous stirring to room temperature or the desired temperature so as to form β-crystals and adding hydrogen peroxide in an amount of 0.1-4 percent by weight of the total weight of the final composition, the hydrogen peroxide preferably being added as a solution in the remainder of the water for the composition.

9. A process according to claim 8, *characterized* by keeping the mixture at a temperature that is 5-15°C above said conversion temperature until equilibrium has been reached.

10. A process according to any one of claims 8 and 9, *characterized* by cooling the mixture at a rate of 0.5-5°C per minute.

11. Use of a composition as claimed in any one of claims 1-7 as a teat immersion composition for milk-producing animals.

## Ansprüche

1. Stabilisierte, wässrige Wasserstoffperoxidzusammensetzung, dadurch gekennzeichnet, daß sie eine wässrige Dispersion enthält, die, bezogen auf das Gesamtgewicht der Zusammensetzung, 0,1 bis 4 Geh.% Wasserstoffperoxid und 0,5 bis 5 Gew.% β-Kristalle von einem oder mehreren Lipid(en) enthält, die aus Monoglyceriden von Fettsäuren, Ascorbinsäure-,Phosphat- oder Milchsäureester von Fettsäuren und Monoglycerinether ausgewählt sind, wobei die Fettsäuren bzw. die Etherketten gesättigt sind und 12 bis 18 Kohlenstoffatome aufweisen.

2. Zusammensetzung nach Anspruch 1, dadurch gekennzeichnet, daß das Monoglycerid Monolaurin, Monomyristin, Monopalmitin oder Monostearin oder eine Mischung von zwei oder mehreren dieser Verbindungen ist.

3. Zusammensetzung nach Anspruch 2, dadurch gekennzeichnet, daß das Monoglycerid Monolaurin oder eine Mischung von Monolaurin und Monomyristin ist, worin der Anteil von Monolaurin mindestens 10 Gew.% beträgt.

4. Zusammensetzung nach einem der vorhergehenden Ansprüche, dadurch gekennzeichnet, daß die Konzentration von Wasserstoffperoxid 0,1 bis 2 Gew.%, insbesondere 0,2 bis 1 Gew.%, beträgt.

5. Zusammensetzung nach einem der vorhergehenden Ansprüche, dadurch gekennzeichnet, daß die Konzentration von β-Lipidkristallen 1 bis 5 Gew.%, insbesondere 1 bis 3 Gew.%, beträgt.

6. Zusammensetzung nach einem der vorhergehenden Ansprüche, dadurch gekennzeichnet, daß sie ein metallionkomplexbildendes Mittel in einer Konzentration enthält, die die Stabilität des Wasserstoffperoxids in Gegenwart des Metallions verbessert.

7. Zusammensetzung nach Anspruch 6, dadurch gekennzeichnet, daß das komplexbildende Mittel aus Ethylen-Diamin-Tetra-Essigsäure (EDTA), Zitronensäure, Ascorbinsäure und Phosphonsäuren ausgewählt ist und daß deren Konzentrationen bevorzugt wie folgt sind :

| EDTA | < 0,1 Gew.% |
| Zitronensäure | < 2 Gew.% |
| Ascorbinsäure | < 2 Gew.% |
| Phosphonsäure | < 2 Gew.%, |

bezogen auf das Gesamtgewicht der Zusammensetzung.

8. Verfahren zur Herstellung einer stabilisierten, wässrigen Wasserstoffperoxidzusammensetzung nach einem der Ansprüche 1 bis 7, dadurch gekennzeichnet, daß man das Lipid mit mindestens einem Teil des in der Endzusammensetzung vorhandenen Wassers vermischt, vorzugsweise zu einer Lipidkonzentration von 15 bis 30 Gew.%, daß man die Mischung auf eine Temperatur oberhalb der sogenannten Umwandlungstemperatur des Lipids bringt, wobei diese Temperatur definiert ist als die niedrigste Temperatur, bei der ein Lipidteilchen in Kontakt mit einem Überschuß an Wasser, Wasser absorbiert und in zylindrische oder sphärische Teilchen mit starker Doppelbrechung überführt wird, die Mischung oberhalb dieser Temperatur während des Rührens bis die Umwandlung stattgefunden hat, hält, die Mischung mit kontinuierlichem Rühren auf Raumtemperatur oder die erwünschte Temperatur abkühlt, um β-Kristalle zu bilden, und Wasserstoffperoxid in einer Menge von 0,1 bis 4 Gew.%, bezogen auf das Gesamtgewicht der Endzusammensetzung, zugibt, wobei das Wasserstoffperoxid vorzugsweise als Lösung im Rest des Wassers für die Zusammensetzung zugegeben wird.

9. Verfahren nach Anspruch 8, dadurch gekennzeichnet, daß man die Mischung bei einer Temperatur, die 5 bis 15°C oberhalb der Umwandlungstemperatur liegt, hält, bis das Gleichgewicht erreicht worden ist.

10. Verfahren nach einem der Ansprüche 8 und 9, dadurch gekennzeichnet, daß man die Mischung mit einer Geschwindigkeit von 0,5 bis 5°C pro Minute abkühlt.

11. Verwendung einer Zusammensetzung nach einem der Ansprüche 1 bis 7 als Eintauchzusammensetzung für die Zitzen von milchproduzierenden Tieren.

## Revendications

1. Composition aqueuse de peroxyde d'hydrogène stabilisé, caractérisée en ce qu'elle comprend une dispersion aqueuse qui, sur la base du poids total de la composition, contient 0,1 à 4 pourcent en poids de peroxyde d'hydrogène et 0,5 à 5% en poids de cristaux β d'un ou plusieurs lipides choisis parmi les monoglycérides d'acides gras, les esters ascorbiques, phosphoriques ou lactiques d'acides gras et des monoéthers de glycérol, lesdits acides gras et lesdites chaines d'éthers, respectivement, étant saturé(e)s et ayant 12 à 18 atomes de carbone.

2. Composition selon la revendication 1, caractérisée en ce que le monoglycéride est la monolaurine, la monomyristine, la monopalmitine ou la monostéarine, ou un mélange de deux ou de plusieurs de ces glycérides.

3. Composition selon la revendication 2, caractérisée en ce que le monoglycéride est la monolaurine ou un mélange de monolaurine et de monomyristine, dans lequel la proportion de monolaurine est d'au moins 10% en poids.

4. Composition selon l'une quelconque des revendications précédentes, caractérisée en ce que la concentration du peroxyde d'hydrogène est de 0,1 à 2% en poids, notamment de 0,2 à 1% en poids.

5. Composition selon l'une quelconque des revendications précédentes, caractérisée en ce que la concentration des cristaux de lipides β est de 1 à 5% en poids, notamment de 1 à 3% en poids.

6. Composition selon l'une quelconque des revendications précédentes, caractérisée en ce qu'elle contient un agent de formation de complexes d'ions de métaux, présent en une concentration qui améliore la stabilité du peroxyde d'hydrogène en présence dudit ion de métal.

7. Composition selon la revendication 6, caractérisée en ce que l'agent formateur de complexe est choisi parmi l'acide éthylène diamine tétra-acétique (EDTA), l'acide citrique, l'acide ascorbique et les acides phosphoniques, et en ce que leurs concentrations sont de préférence les suivantes :

| EDTA | < 0,1 % en poids |
| acide citrique | < 2 % en poids |
| acide ascorbique | < 2 % en poids |
| acide phosphonique | < 2 % en poids |

EP 0 250 539 B1

8. Procédé pour la préparation d'une composition aqueuse de peroxyde d'hydrogène stabilisé, telle que revendiquée dans l'une quelconque des revendications 1 à 7, caractérisé en ce qu'on mélange le lipide avec au moins une partie de l'eau devant être présente dans la composition finale, de préférence jusqu'à une concentration en lipide de 15 à 30% en poids ; on confère audit mélange une température supérieure à ce qu'on appelle la température de conversion du lipide, cette température étant définie comme étant la température la plus basse à laquelle une particule du lipide en contact avec un excès d'eau absorbe l'eau et est convertie en des particules cylindriques ou sphériques ayant une forte biréfringence ; on maintient le mélange au dessus de ladite température tout en agitant jusqu'à ce que la conversion ait eu lieu ; on refroidit le mélange, avec agitation continue, jusqu'à la température ambiante ou jusqu'à la temperature voulue de façon à former des cristaux β, et l'on ajoute du peroxyde d'hydrogène en une quantité de 0,1 à 4% en poids du poids total de la composition finale, le peroxyde d'hydrogène étant de préférence ajouté sous forme d'une solution dans le reste de l'eau pour la composition.

9. Procédé selon la revendication 8, caractérisé en ce qu'on maintient le mélange à une température supérieure de 5 à 15°C à ladite température de conversion jusqu'à ce que l'équilibre ait été atteint.

10. Procédé selon l'une quelconque des revendications 8 et 9, caractérisé en ce qu'on refroidit le mélange à une vitesse de 0,5 à 5°C par minute.

11. Utilisation d'une composition telle que revendiquée dans l'une quelconque des revendications 1 à 7 à titre de composition pour l'immersion de mamelons ou de mamelles d'animaux producteurs de lait.